Europäisches Patentamt

European Patent Office

Office européen des brevets

(19)

(11) **EP 1 550 381 A1**

(12) **EUROPEAN PATENT APPLICATION**

(43) Date of publication:
06.07.2005 Bulletin 2005/27

(51) Int Cl.⁷: **A41H 3/00**

(21) Application number: **03029767.5**

(22) Date of filing: **23.12.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventor: **Kuesters, Christoph**<br>**1831 Diegem (BE)** |
| | (74) Representative: **VOSSIUS & PARTNER**<br>**Siebertstrasse 4**<br>**81675 München (DE)** |
| (71) Applicant: **3M Innovative Properties Company**<br>**St. Paul, Minnesota 55133-3427 (US)** | |

(54) **Designer software for retroreflective garments**

(57) The present invention provides a method for determining the retroreflectivity of a garment having attached thereto retroreflective patches. According to the method of the present invention each retroreflective patch of said garment is subdivided into discrete subelements. The dependence of the retroreflectivity on the orientation of said subelement can be calculated using retroreflectivity data containing measured retroreflectivity parameters. The retroreflectivity of a subelement is determined from the retroreflectivity data associated with the subelement and the 3-dimensional orientation of the subelement on said garment in a model of the garment which may be a computer generated 3D model of the garment when worn by a user. The retroreflective performance of the garment in a desired view is calculated from the contribution of the subelements visible in a desired view.

EP 1 550 381 A1

## Description

The present invention relates to computer-aided design of retroreflective garments and, in particular, to a method for estimating the retroreflective performance, in particular the integrated luminance intensity of retroreflective emblems on garments.

In order to increase the visibility and thus the safety of pedestrians or other outside traffic participants on streets and roads in poor light and darkness, emblems or patches comprising retroreflective material are commonly applied to garments. Retroreflective emblems are applied to all kinds of outerwear, such as jackets, trousers, shoes, caps, etc. For example, in the case of a jacket, retroreflective emblems may be applied on the front and backside and/or on the sleeves.

The visibility of the garment is, however, influenced by the quality, area and distribution of the retroreflective material used. The designer may choose a specific type of retroreflective material, the distribution of the retroreflective emblems on the garment and the total area that is covered by the retroreflective material. When designing a garment, the main objective of the designer is, however, the aesthetic appearance of the garment including the retroreflective portions of the garment. In other words, the designer will distribute the reflective emblems in a way that the appearance of the garment is improved and will not necessarily focus on the safety aspects, i.e. visibility of the person wearing the garment from different viewing angles. Moreover, it is very difficult to estimate whether visibility is sufficient from all directions by merely regarding the distribution of the retroreflective material on the garment. However, a garment can only be regarded as fulfilling the fundamental requirements for protecting the health and safety of the wearer if it is sufficiently visible through 360°, i.e. all around.

It is thus important for the designer to distribute the retroreflective material on the garment in such a way that visibility is optimized in all directions, but the garment should nevertheless have an attractive appearance. In other words, the balance between safety and thus visibility on the one hand and design on the other hand should be optimized.

Computer-aided design and manufacturing is generally known in the art of garment production. US-B1-6 473 671 describes a system and method for a computer-aided design and automation of mass customization, comprising a 3-D body model and a virtual prototype model including a close fitting definition, a 3-D library loose fitting definition and texture mapping linked to the close fitting definition and 3-D library loose fitting definition. The system and method may further include a 2-D spreader model for subsequent manufacturing.

Furthermore, methods and systems for modeling and modifying garments, providing a basis for integrated "virtual tailoring" systems and processes are known from WO 02/57964. The garment models provided therein relate specific design points of the garment to specific body regions in terms of explicit 3-D relationship rules, for example for the purposes of visualization and/or garment production. Particularly, the methods enable garment design modifications within an integrated virtual tailoring environment.

Retroreflective material which may be used as retroreflective emblems on garments may be based on glass bead technology, such as described, for example, in U.S. Pat. Nos. 4,025,159 (McGrath); 4,983,436 (Bailey); 5,064,272 (Bailey); 5,066,098 (Kult); 5,069,964 (Tolliver); and 5,262,225 (Wilson) or on cube corner technology, such as described, for example, in U.S. Pat. Nos. 4,588,258 (Hoopman); 4,775,219 (Appledorn et al.); 4,895,428 (Nelson); 5,138,488 (Szczech); 5,387,458 (Pavelka); 5,450,235 (Smith); 5,605,761 (Burns); 5,614,286 (Bacon Jr.) and 5,691,846 (Benson, Jr.). A retroreflective sheet comprising cube corners is for example available as Scotchlite™ High Gloss Film #6260 from 3M Company, St. Paul, MN/USA. An example of a retroreflective material comprising glass beads is Scotchlite™ Film #8910, also available from 3M Company, St. Paul, MN/USA.

In order to assist a designer when designing a garment having retroreflective emblems in optimizing both the visibility and the appearance of the garment, there is a need for providing methods for automatically determining the visibility, i.e., the integrated luminance intensity or retroreflective performance of the garment, which in turn is a function of the type of retroreflective material used, as well as the area and distribution of the retroreflective emblems.

The present invention provides a method for estimating the retroreflective performance of the garment in a desired view, the garment having attached thereto retroreflective emblems. An "emblem" is herein defined as a garment area having retroreflective characteristics. An emblem may comprise a self-supporting patch of retroreflective material attached to a garment by adhering, sewing or heat-sealing, for example, or may comprise a garment area that is rendered retroreflective by application of a retroreflective substance such as a retroreflective ink or paint, for example.

The retroreflective performance of the garment can be estimated from the contribution of the retroreflective emblems on the garment that are visible in the desired view. The retroreflective emblems may have any desired size and shape, may comprise any type of emblem, and may include those which cover substantial portions of the garment.

The method of the present invention may automatically determine the overall luminance or the coefficient of luminous intensity of the garment in the desired view. The method may further be repeated at a plurality of discrete views around the garment so as to obtain the retroreflective performance of the garment from different directions around the garment.

The method is conveniently implemented with a computer system. Accordingly, the present invention also provides a computer suitably programmed to carry out the above method as well as a computer readable medium comprising a respective computer program.

According to the invention, the method comprises subdividing each retroreflective emblem attached to a garment into discrete subelements. The subelement can be of any shape but preferably has the shape of a triangle. However, any other shape which allows to cover the area of the emblem may be employed, such as squares, rectangles, hexagons etc. The retroreflectivity of a subelement can be calculated on the basis of the 3D orientation of the subelement, from measured retroreflectivity data. The retroreflectivity data describes the retroreflectivity of the subelement as a function of the orientation of the subelement. The retroreflectivity data are typically obtained by measuring the retroreflectivity of a representative sample of retroreflective material at different angles of orientation in three dimensional space. Typically, the measured retroreflectivity data may comprise the coefficient of retroreflection (R') or the coefficient of luminous intensity (CIL). The measured retroreflectivity data may be stored as a lookup table or be stored as a mathematical function that can be obtained by fitting a function through the measured retroreflectivity parameters. It will generally be preferred to store the retroreflectivity data as a lookup table to save calculation time. Typically, the lookup table will contain the measured retroreflectivity at discrete angles around three orthogonal axes. Depending on the nature of the retroreflective material and the desired accuracy, the retroreflectivity data may contain data every 1, 5 or 10 degrees. Also, some retroreflective material may not vary much with angle of orientation around one particular axis but vary a lot at various angles around the other axes. Accordingly, the angle interval along one axis may be different from that around one or both of the other axes. For example, when the retroreflective material is a beaded retroreflective material, the data contained in the lookup table may be at every 5 or 10 degrees around two orthogonal axes that are perpendicular to the direction of the incident light while containing only data at 0 and 90 degrees along the third orthogonal axis.

In order to determine the 3D orientation of a subelement from a desired viewing angle when the garment is worn by a user, a model of the garment may be provided, for example, by using a system as described in WO 02/57964. The model of the garment may be a computer generated 3D-model of the garment when worn by a user which may also be used by the designer to place the retroreflective emblems on the garment or may be a dress pattern of the garment. The retroreflective performance of the garment in said desired view is then calculated from the contribution of the subelements visible in the desired view.

In order to determine the retroreflectivity of a subelement using the retroreflectivity data, orientation angles of said subelement representing the orientation of the subelement relative to said two orthogonal axes are obtained, and the value of the retroreflectivity comprised in the retroreflectivity data for angles that most closely correspond to the orientation angles obtained is retrieved. An interpolation between measured values of retroreflectivity included in said retroreflectivity data may be performed to retrieve the retroreflectivity value for the actual orientation of the subelement. The retroreflectivity and luminance of the subelement can then be calculated from the retrieved retroreflectivity value corresponding to the orientation of the subelement and the area of the subelement visible in a particular view of the garment.

The retroreflective patches may be placed on the 3D garment model with the help of a garment design program that runs on a computer system. Typically, the computer system will comprise a display and a keyboard and/or mouse for editing the design on the 3D garment model. The computer system may also comprise alternative or additional means for input such as for example a scanner and may further comprise a printer or plotter for printing the 3D garment model and/or any other output of the computer program. In one embodiment, the computer program may also comprise program instructions for calculating the retroreflective performance of the garment model at different viewing angles. In this way, the designer may immediately check the effect of a placed retroreflective patch on the visibility in a certain viewing direction. The distribution and the area of the retroreflective applications may thus be optimized during design either by redistributing or adding retroreflective emblems.

Alternatively or additionally, the 3D garment model may be stored on a computer readable medium or the computer system may comprise a network connection or modem connection to send a computer representation of the 3D garment model to another computer on which the retroreflective performance may then be calculated.

The retroreflective performance may be represented in a number of different ways. For example, the computer program calculating the retroreflective performance may calculate the integrated luminance intensity and/or the coefficient of luminance intensity of the garment in a particular view. The computer program may also calculate the integrated luminance intensity and/or coefficient of luminance intensity for the individual emblems in a particular view. Each of these calculations may be produced as an output by the computer program. Such output may be displayed on a display screen, stored on a computer readable medium or printed on a printer for example along with a print of the garment design. The output may be in the form of tables or the computer program may produce a graphical representation of the retroreflectivity at different angles of view. A typically used graphical representation is a spider diagram.

In the following, the invention will be explained in greater detail with reference to the accompanying drawings that illustrate certain embodiments of the invention without limiting it in any manner.

In the drawings

Fig. 1      is an example of a front view (Fig. 1 A) and a rear view (Fig. 1 B) of a garment having several retroreflective emblems which has been designed by using a garment design software;

Fig. 2      shows a spider diagram and a corresponding tabular presentation of the coefficient of luminous intensity (CIL) of the garment shown in Fig. 1 using cube corner retroreflective material as a function of the viewing angle as determined with the method of the invention;

Fig. 3      shows the result of an actual measurement of the CIL of the garment as shown in Fig. 1 using the same cube corner retroreflective material as in Fig. 2;

Fig. 4      shows a spider diagram and a corresponding tabular presentation of the coefficient of luminous intensity (CIL) of the garment shown in Fig. 1 using retroreflective material based on glass-beads as a function of the viewing angle as determined with the method of the invention;

Fig. 5      shows the result of an actual measurement of the CIL of the garment shown in Fig. 1 using the same retroreflective material based on glass-beads as in Fig. 4;

Fig. 6      shows another example of a computer designed garment with retroreflective emblems in a front view (Fig. 6A) and a rear view (Fig. 6B);

Fig. 7      shows a spider diagram and a corresponding tabular presentation of the CIL of the garment shown in Fig. 6 as a function of the viewing angle as determined with the method of the invention; and

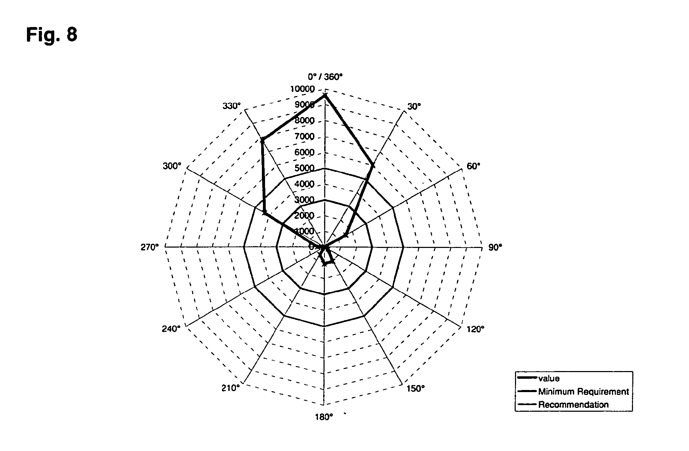

Fig. 8      shows the result of an actual measurement of the CIL of the garment as shown in Fig. 6.

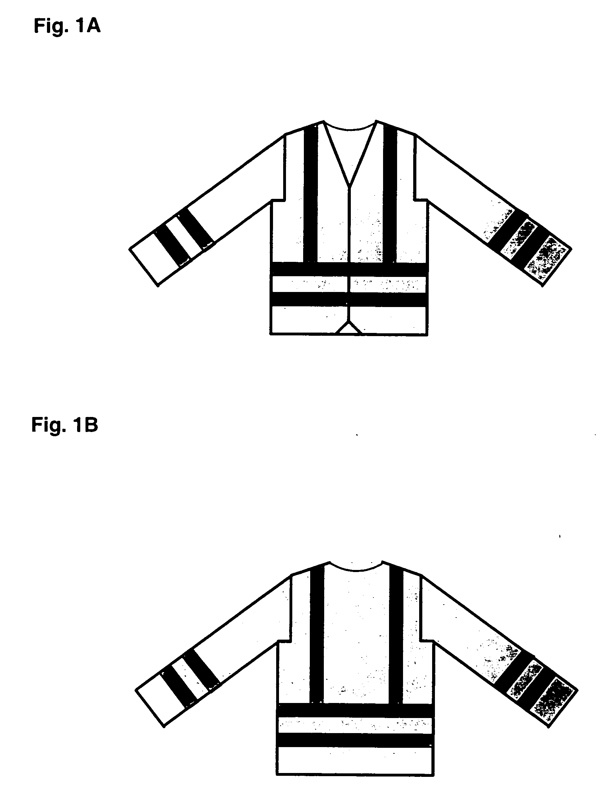

Fig. 1 is a graphic display generated by a garment designer computer program showing schematically a front view (Fig. 1A) and a rear view (Fig. 1B) of a garment having retroreflective portions. The computer program comprises editing functionality for editing the location, the nature and area of reflective material on the garment. Additionally, the editing functionality may comprise an option from which different 3D garment models may be selected simulating different configurations of the garment as may occur when worn by a user and/or simulating different garment sizes such as e.g. a garment for child or an adult.

To select a particular retroreflective material, the editing functionality may comprise a menu displaying a text description of different retroreflective materials from which the desired retroreflective material may be selected e.g. by clicking on the description of the desired material with a mouse pointer. Alternatively, graphic representations or photographs of different materials may be displayed and the user may then select by clicking on the desired graphic representation or photograph. The selected material may then be drawn on the garment model using a mouse or other input device such as a tablet or a touch screen so as to put one or more emblems on the garment model. To allow for accurate placement and designing the computer program may include functionality that allow enlarging the garment model in a particular section of interest.

An emblem is typically defined by the following criteria: the definition of the type of retroreflective material used; the definition of the size or area of the emblem; and the definition of the effective retroreflective area which may be given by the percent reduction of the area of the emblem which may be caused for example by weld or embossing lines, printing or non-reflective surface portions of the emblem.

The retroreflective data corresponding to the different retroreflective materials from which a user may select, may be stored as a database on a computer readable medium such as for example a CD-rom, a DVD or a magnetic disk, e.g. a computer hard disk. The retroreflective data associated with different retroreflective materials may also be provided by downloading from another computer system. This is particularly advantageous in that the user is then assured of using the best and most accurate retroreflectivity data.

When the retroreflective emblems have been placed on the garment in a desired distribution, or at any other time as may be desired by a user, a 2-D projection may be calculated for one or more viewing directions. Depending on the capacity and memory resources of the computer system, one or more 2D-projections at desired viewing directions may be calculated and/or updated while designing the emblems on the garment. The retroreflective emblems are thus presented as a projected area in the 2D-projection depending on the viewing angle. By calculating the 2D-projection of a view, the amount of emblem visible in a particular view can be conveniently determined.

The two-dimensional projection of the garment as seen from the selected viewing angle is subdivided into discrete pixels. The pixel size is selected to be small in order to increase the accuracy of the calculation but should not be too small in order to keep the time necessary for calculation at a reasonable level. The pixel size should be preferably between about 5 and 30 mm$^2$, more preferably about 10 to 20 mm$^2$.

The pixels preferably have the shape of a square. However, any other shape which allows to completely cover the area of the projected garment may be employed, like rectangles, triangles, hexagons etc.

The following calculation model may be employed to calculate any of the following retroreflectivity parameters, at a number of individual viewing angles:

a) the integrated luminance intensity, I*,
b) the average luminance, $L_{avg.view}$,
c) the effective area of retroreflective material, $A_{eff}$, and
d) the coefficient of luminous intensity, CIL.

The calculation model should generally be based on the reference system presented in CIE Technical Report "Retroreflection: Definition and Measurement", CIE 54.2/2001, published by the International Commission on Illumination (Vienna, Austria), ISBN 3 900 734 99 2.

At first, it is determined for each pixel on the garment whether it is occupied by a retroreflective material or not at a specific viewing angle. If the pixel is occupied by a retroreflective material, the 3D orientation of the corresponding subelement in the garment model is retrieved. The description of the orientation of the subelement is conveniently based on the reference systems presented in the above Technical Report. The retrieved orientation can then be used to calculate the retroreflectivity of the pixel based on the retroreflectivity data using below described formulas.

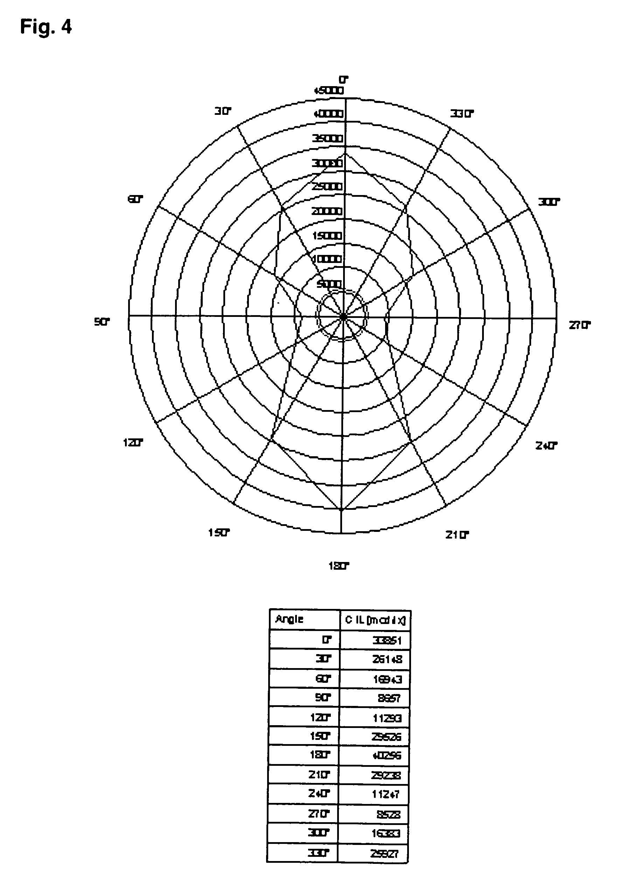

A classic goniometer system can be used to gather the measured retroreflecivity data for different retroreflective materials. An example of such a system is shown in the above CIE Report in figure 4 on page 8. In this system, the direction of the illumination is considered the principle direction. The direction of observation and the orientation of the retroreflector are expressed in terms relating to that direction. The four angles in this system follow exactly the motions of the most common design of goniometer systems.

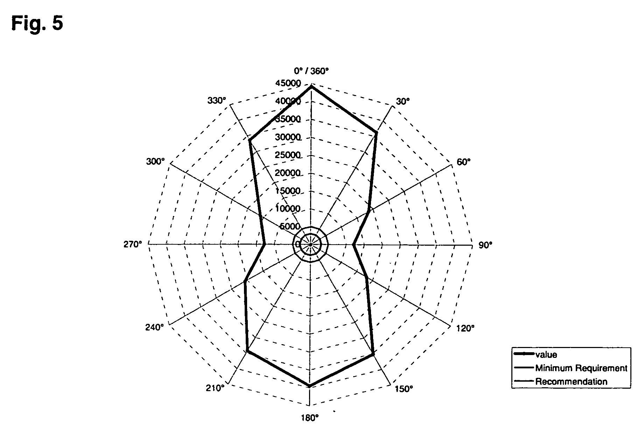

The three motions of the retroreflector (which are further illustrated in figure 5 on page 11 of the above CIE Report) are the angles $\pm \beta_1$, $\pm\beta_2$ and $\varepsilon$. The fourth angle used in this system is the observation angle $\alpha$ between the illumination axis and the observation axis. As a default value, $\alpha = 0.2°$ may be defined. The effective rotation angle, $\varepsilon_{eff}$, may be determined as the difference between $\varepsilon_{emblem} = 0$ and $\varepsilon_{reference\ system} = 0$ and the orientation of the subelement relative to the observer is expressed via $\beta_1$ and $\beta_2$.

The coefficient of retroreflection, R', is determined based on the orientation angles $\beta_1$ and $\beta_2$ and the rotation angle $\varepsilon_{eff}$ for each retroreflective subelement from the provided retroreflectivity data. The retroreflectivity data is preferably provided in form of retroreflectivity tables as schematically illustrated in Table 1 for a microprismatic product and in Table 2 for a glass bead retroreflective products. In these Tables, the retroreflection R' is presented as individual data, depending on the orientation angles $\beta_1$ and $\beta_2$ and the rotation angle $\varepsilon_{eff}$. R' is typically expressed in units of cd/$(m^{2*}lx)$.

If the exact three-dimensional orientation of a subelement in question is not directly contained in the R' Tables, then an interpolation may be made to obtain an estimation of the coefficient of retroreflectivion $R'_i$ for that subelement and the associated pixel i.

In order to determine the coefficent of retroreflection value, R' , as a function of $\beta_1$, $\beta_2$ and $\varepsilon_{eff}$ by interpolation, it is preferred to first determine R' $(\beta_{1,i}, \beta_{2,i})$ in the $\beta_1$ and $\beta_2$ matrix, $\beta_{1,i}$ and $\beta_{2,i}$ being the actual orientation angles of pixel i.

The Tables preferably contain coefficient of retroreflectivity values, R' ,as individual data ranging from $\beta_1 = 0°$ to 60°, $\beta_2 = 0°$ to 60° with a 10° interval.

In the case of microprismatic or cube corner products, the Tables preferably further comprise R' data for rotation angles from $\varepsilon = 0°$ to 90° with a 10° interval (see Table 1). The R' data for microprismatic products exhibit symmetric data with the rotation angle $\varepsilon$. From 90° to 180°, the R' values are mirror symmetric to the data from 0° to 90°, e.g., R' ($\varepsilon = 100°$) = R' ($\varepsilon = 80°$) or R' ($\varepsilon = 170°$) = R' ($\varepsilon = 10°$). From 180° to 360°, the R' are symmetric to the data from 0° to 180°. The interpolation between these data points is preferably made by an interpolation by a curve approximation considering at least four neighboring data points.

For retroreflective materials based on glass beads, the retroreflectivity is preferably presented as individual data ranging from $\beta_1 = 0°$ to 60°, $\beta_2 = 0°$ to 60° with a 10° interval and for rotation angles $\varepsilon = 0°$ and $\varepsilon = 90°$ as shown in Table 2. Coefficient of retroreflection, R', depending on the rotation $\varepsilon_{eff}$ can then be calculated using the following formula:

$$R'(\varepsilon_{eff}) = \frac{b^2}{1 - e^2 \cos^2 (90° - \varepsilon_{eff})},$$

wherein

$$e = \frac{\sqrt{a^2 - b^2}}{a} < 1,$$

with $a = R'(\beta_{1,i}, \beta_{2,i}, \varepsilon = 0°)$ and $b = R'(\beta_{1,i}, \beta_{2,i}, \varepsilon = 90°)$.

Using the R' value of each pixel, the luminance of each pixel is given by

$$L_i = E^* R'(\beta_{1,i}, \beta_{2,i}, \varepsilon_{eff})$$

wherein E is the illuminance. The illuminance is variable but may be initially set to a default value, for example, E = 150 mlx = 0.15 lx.

From the luminance per pixel, the average luminance of each emblem can be calculated by

$$L_{avg.emblem} = \frac{1}{n} \sum_{i=1}^{n} L_i,$$

wherein n is the number of pixels comprised in the emblem, and the average luminance per view is given by the sum over all emblems per view, wherein $L_{j.avg.emblem}$ is the average luminance of emblem j, and m is the number of emblems per view:

$$L_{avg.view} = \frac{1}{m} \sum_{j=1}^{m} L_{j.avg.emblem}.$$

The effective area per view can be calculated using the effective area of each pixel $A_i$ using the formula

$$A_{eff} = \frac{1}{m*n} \sum_{j=1}^{m} \sum_{i=1}^{n} A_i,$$

m being the number of emblems per view and n being the number of pixels of an emblem.

The coefficient of luminous intensity (CIL) is defined as

$$CIL_{view} = \frac{I^*}{E},$$

wherein I* is the integrated luminance intensity given by $I^* = L_{avg.view} * A_{eff}$. CIL is defined in units of mcd/lx.

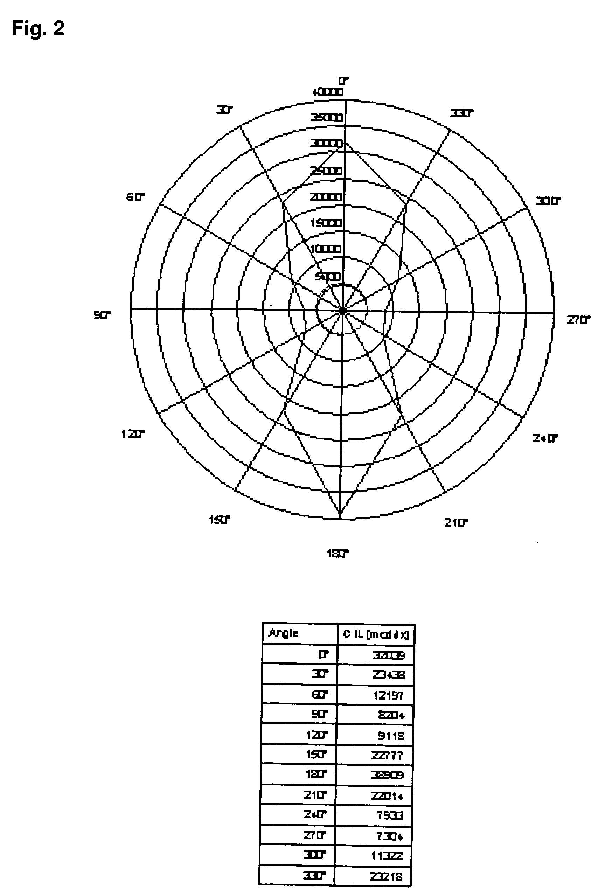

The result of the calculation may thus be presented as the coefficient of luminance intensity (CIL) in units of millicandelas per lux (mcd/lx) for each viewing angle. The calculated data for various viewing angles can be presented graphically as shown, for example in Fig. 2. For this diagram, the CIL has been calculated for several viewing angles from 0° to 360° around the garment. This type of diagram is herein also called a spider diagram.

The calculated data may also be presented as a tabular summary (see Fig. 2). In such a table of data, the following values for the total garment may be presented: the effective area of retroreflective material and the coefficient of luminance intensity. For all different viewing angles the following data may be presented as a table of data and as a spider diagram: the integrated luminance intensity I*, the average luminance $L_{avg}$, the effective area of retroreflective material $A_{eff}$ and the coefficient of luminous intensity (CIL). Preferably, also reference values should be indicated for the integrated luminance intensity, the average luminance intensity and the coefficient of luminous intensity. In such a way, the designer may readily compare the result of the calculation with a minimum requirement or a desired recommendation. The above described calculation model can be implemented in a computer readable medium comprising a computer program carrying out the steps of said calculation model, as well as in a suitably programmed computer.

Example 1

Example 1 of a design of a retroreflective garment shown in Fig. 1 comprises two parallel lateral stripes of retroreflective material passing continuously around the waste area of the garment, two vertical stripes on both front and rear sides of the garment as well as two parallel stripes around each sleeve. The stripes have a width of 5cm. In Example 1, a cube corner type retroreflective material was used. Measured retroreflectivity data, for example as shown in Table 1, together with the interpolation method presented above for microprismatic retroreflectivity products was used to calculate the coefficient of retroreflection, R', values for each subelement and each viewing angle. The resulting CIL diagram is shown in Fig. 2.

The method of the present invention thus readily shows the garment designer how the garment as designed is likely to reflect when viewed from any angle. In this Example, the garment reflects highly when viewed from the front or back, but has much less retroreflectivity when viewed from the sides, as can be seen from Fig. 2.

The results can also be presented in a manner such that norms or minimum requirements for retroreflectivity are provided on the grid for the graphic output. Thus, the graph can conveniently show whether the design in question meets certain recommended values for retroreflectivity. The minimum and recommended parameters are as shown in Fig. 2.

Comparative Example 1

As Comparative Example 1, an actual garment bearing stripes of the cube corner type retroreflective material used in Example 1 was prepared according to the design shown in Example 1. The garment was placed on a mannequin. The mannequin was then illuminated by a slide projector at an illuminence E of about 100 lx. The distance of the mannequin from the light source was about 15m.

The amount of light retroreflected at a small observation angle (alpha) of circa 0.20 to 0.33° was then measured, again at circa 15 m from the mannequin using a luminance camera Model LMT L 1009 available from the Lichtmesstechnisches Institut Berlin, Berlin, Germany. The luminance (L) was recorded in units of candela/m$^2$.

Using the illuminance (E), the luminance (L) and the area evaluated (A) in square meters, the CIL was then calculated according to the formula:

$$CIL = \frac{L * A}{E}$$

The mannequin bearing the garment was then rotated by an angle of 30°. A second set of measurements was then performed in an identical fashion. The mannequin was rotated repeatedly by 30° and re-evaluated.

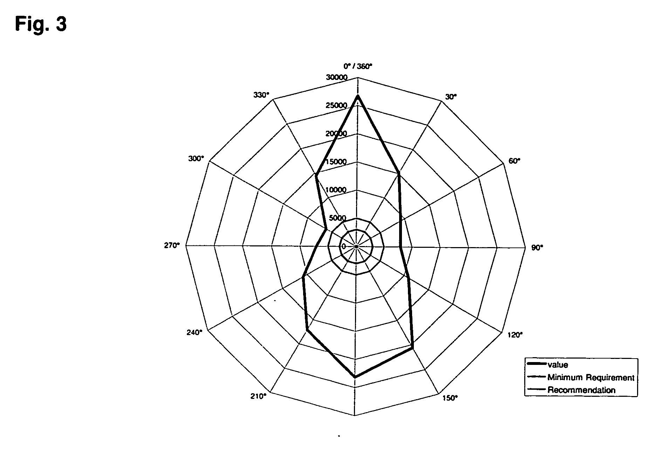

The data gathered from these actual measurements were then plotted in a similar manner to that of Example 1. Results for Comparative Example 1 are shown in Fig. 3.

Example 1 and Comparative Example 1 employed the same garment design bearing emblems of the same cube corner type retroreflective material. By comparison of the results of Example 1 (shown graphically in Fig. 2) with the results of Comparative Example 1 (shown graphically in Fig. 3), it can be seen that the shape of the CIL vs. angle diagram for the virtual garment provided by the method of the present invention agrees reasonably with that of the real garment actually measured.

The absolute value of the CIL at a specific angle for the actual garment may, however, differ from the calculated data. Data collected from actual measurements on the garment of Comparative Example 1 are summarized in Table 3. This difference may be accounted for by the fact that the actual measurements are made on a mannequin that may have a slightly different size and/or cross-sectional shape as compared to the 3D mannequin of the predictive tool. Folding or creases in the garment on the mannequin may also account for differences between the absolute values and calculated data.

Example 2

Example 1 was repeated with the exception that a retroreflective material based on glass bead technology was employed. Thus, a separate set of coefficient of retroreflectivity, R' , data was obtained for this glass-bead based retroreflective material.

Since glass bead retroreflectivity is much more symmetrical as compared to cube corner retroreflectivity, measurements of the coefficient of retroreflection, R', were made at only two angles of rotation ε, 0° and 90°, as compared to measurement at ten different angles of rotation as called for in Example 1. Data for angles of rotation between 0° and 90° can be interpolated based on known behavior of these systems, as described above.

The method of the present invention generated a diagram and CIL data as shown in Fig. 4.

Comparative Example 2

Comparative Example 1 was repeated with the exception that the retroreflective material of Example 2 comprising glass beads was used instead of the cube corner type retroreflective material of Comparative Example 1. The actual data are summarized in Table 3 and are presented graphically in Fig. 3.

By visual comparison of Figs. 4 and 5, respectively, it can be seen that the method of the present invention provides good correlation with the measurement made on an actual garment of the same designs. Again, the absolute values may differ for the reasons outlined with respect to Comparative Example 1.

Example 3

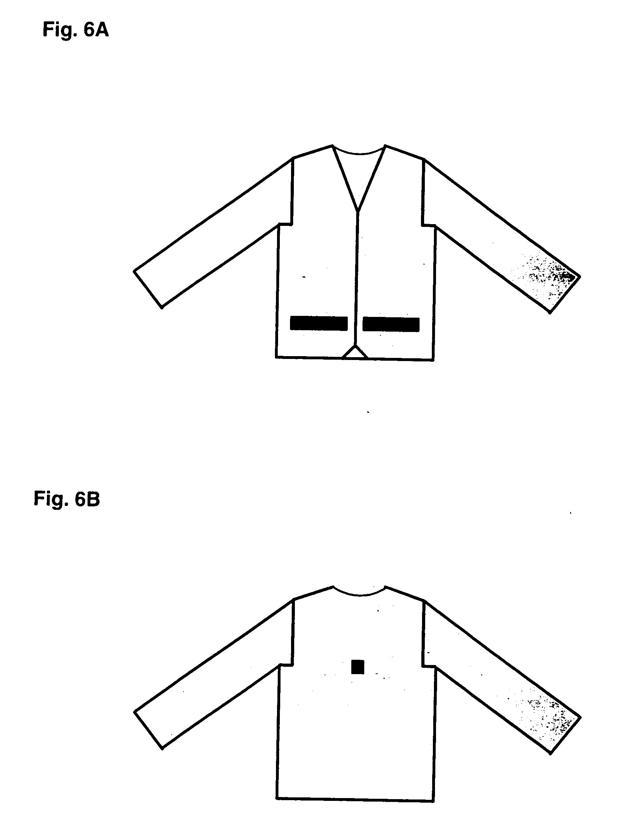

Example 3 was performed in a manner similar to that of Example 2, employing R' data tables obtained from glass bead type retroreflective material. The design of the garment was altered, however, in comparison to the previous Examples, so that the garment had only one 5 cm lateral stripe of retroreflective material on the front of the virtual garment and one small square of retroreflective material of about 5 cm x 5 cm centered on the back of virtual garment (Figs. 6A and 6B, respectively).

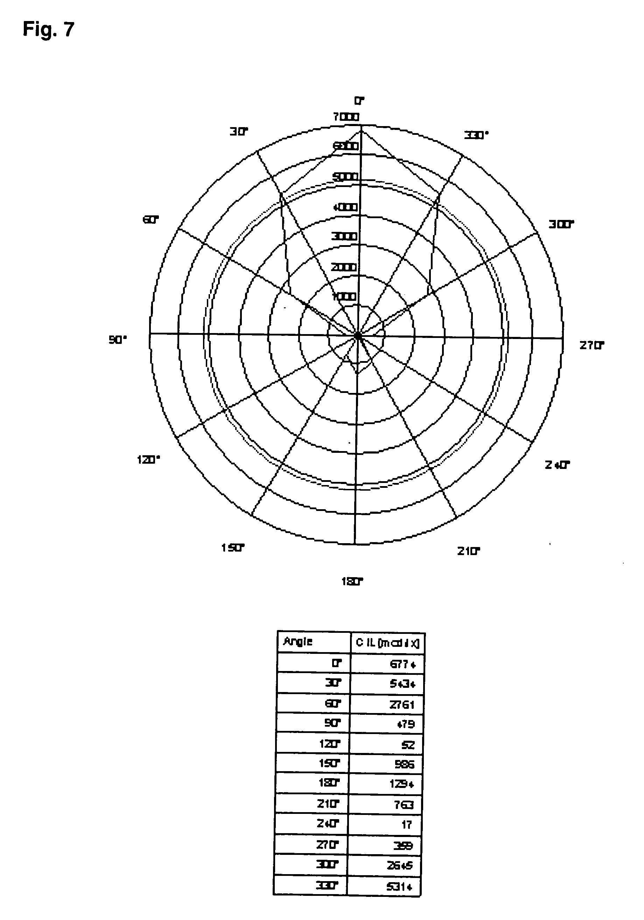

The diagram resulting from use of the predictive tool of the invention, shown in Fig. 7, indicated that the design is less satisfactory as compared to those of Example 1 or Example 2.

Comparative Example 3

An actual garment was prepared with the glass bead type retroreflective material of Example 3 using the "poor" design of Example 3. Again, the shape of the diagram is similar for the measured and calculated results. Data collected from actual measurements on the garment of Comparative Example 3 are shown in Fig. 10 and summarized in Table 3 below.

The above Examples show that with the method, computer program, computer readable medium and computer of the present invention the actual retroreflectivity properties of a garment provided with retroreflective emblems can be suitably modeled and predicted.

Table 1

**Rotation= 90°**

| β2＼β1 | 0° | 10° | 20° | 30° | 40° | 50° | 60° |
|---|---|---|---|---|---|---|---|
| 0° | 605 | 566 | 490 | 361 | 83 | 8 | 3,1 |
| 10° | 391 | 403 | 394 | 181 | 66 | 12 | 2,3 |
| 20° | 230 | 208 | 106 | 27 | 15 | 41 | 1,9 |
| 30° | 185 | 151 | 33 | 15 | 10 | 5,3 | 2,4 |
| 40° | 177 | 138 | 25 | 12 | 11 | 4,3 | 2,2 |
| 50° | 122 | 103 | 19 | 7,7 | 4,3 | 2,4 | 1,3 |
| 60° | 39 | 36 | 8,9 | 3,8 | 2 | 1,1 | 0,73 |

**Rotation=80°**

| β2＼β1 | 0° | 10° | 20° | 30° | 40° | 50° | 60° |
|---|---|---|---|---|---|---|---|
| 0° | 615 | 579 | 501 | 350 | 101 | 14 | 2,8 |
| 10° | 413 | 501 | 445 | 298 | 83 | 7,1 | 6,1 |
| 20° | 232 | 210 | 111 | 75 | 32 | 48 | 1,2 |
| 30° | 173 | 116 | 24 | 15 | 11 | 4,4 | 1,6 |
| 40° | 147 | 37 | 15 | 9,5 | 7,1 | 3,7 | 1,8 |
| 50° | 98 | 19 | 8,9 | 7,9 | 4 | 2,6 | 1,4 |
| 60° | 17 | 7,2 | 5,1 | 2,6 | 1,8 | 1,2 | 0,84 |

**Rotation= 70°**

| β2＼β1 | 0° | 10° | 20° | 30° | 40° | 50° | 60° |
|---|---|---|---|---|---|---|---|
| 0° | 586 | 554 | 476 | 261 | 79 | 30 | 2,3 |
| 10° | 419 | 516 | 472 | 346 | 101 | 8,6 | 2,5 |
| 20° | 242 | 239 | 246 | 106 | 44 | 4,3 | 6,5 |
| 30° | 163 | 61 | 25 | 21 | 13 | 13 | 0,91 |
| 40° | 58 | 18 | 12 | 9,4 | 6,8 | 2,7 | 1,2 |
| 50° | 16 | 9,2 | 7,6 | 5,4 | 3,8 | 2,3 | 1,2 |
| 60° | 5,6 | 4,9 | 3,1 | 2,5 | 2 | 1,4 | 0,9 |

**Rotation= 60°**

| β2＼β1 | 0° | 10° | 20° | 30° | 40° | 50° | 60° |
|---|---|---|---|---|---|---|---|
| 0° | 547 | 515 | 402 | 100 | 28 | 37 | 3,8 |
| 10° | 472 | 518 | 476 | 300 | 81 | 29 | 2 |
| 20° | 272 | 321 | 341 | 165 | 30 | 4,3 | 1,2 |
| 30° | 173 | 54 | 43 | 40 | 15 | 6,5 | 2,6 |
| 40° | 24 | 15 | 12 | 11 | 17 | 1,8 | 0,7 |
| 50° | 8,9 | 7,5 | 9 | 4,8 | 3 | 1,6 | 0,81 |
| 60° | 3,8 | 3,3 | 3 | 2,6 | 1,9 | 1,3 | 0,78 |

**Rotation= 50°**

| β2＼β1 | 0° | 10° | 20° | 30° | 40° | 50° | 60° |
|---|---|---|---|---|---|---|---|
| 0° | 513 | 464 | 256 | 56 | 21 | 19 | 5,3 |
| 10° | 475 | 509 | 453 | 210 | 57 | 109 | 3,3 |
| 20° | 321 | 421 | 384 | 221 | 58 | 78 | 1,6 |
| 30° | 160 | 71 | 82 | 54 | 11 | 2,9 | 0,7 |
| 40° | 20 | 16 | 16 | 11 | 29 | 2,8 | 3,2 |
| 50° | 7,7 | 9,6 | 7,8 | 4,3 | 2,1 | 0,97 | 0,55 |
| 60° | 3,4 | 3,3 | 2,9 | 2,2 | 1,4 | 0,88 | 0,61 |

Table 1 (cont.)

Rotation= 40°

| β2＼β1 | 0° | 10° | 20° | 30° | 40° | 50° | 60° |
|---|---|---|---|---|---|---|---|
| 0° | 497 | 407 | 256 | 74 | 22 | 14 | 6,1 |
| 10° | 484 | 491 | 394 | 68 | 20 | 24 | 4,9 |
| 20° | 382 | 447 | 377 | 154 | 38 | 39 | 2,7 |
| 30° | 125 | 144 | 125 | 58 | 21 | 30 | 1,1 |
| 40° | 19 | 23 | 23 | 13 | 2,8 | 11 | 1,1 |
| 50° | 8,6 | 16 | 67 | 10 | 2,4 | 0,66 | 0,59 |
| 60° | 3,4 | 3 | 2,3 | 1,5 | 0,9 | 0,59 | 0,5 |

Rotation= 30°

| β2＼β1 | 0° | 10° | 20° | 30° | 40° | 50° | 60° |
|---|---|---|---|---|---|---|---|
| 0° | 500 | 365 | 301 | 184 | 32 | 16 | 6,5 |
| 10° | 492 | 462 | 246 | 46 | 21 | 15 | 5,8 |
| 20° | 452 | 439 | 325 | 104 | 16 | 9,8 | 4,1 |
| 30° | 163 | 258 | 213 | 72 | 15 | 5,3 | 2 |
| 40° | 24 | 36 | 31 | 9,6 | 6,8 | 2 | 0,81 |
| 50° | 12 | 16 | 13 | 4,5 | 3,6 | 3,8 | 2,5 |
| 60° | 2,8 | 2,2 | 1,4 | 0,85 | 0,56 | 1,2 | 0,48 |

Rotation= 20°

| β2＼β1 | 0° | 10° | 20° | 30° | 40° | 50° | 60° |
|---|---|---|---|---|---|---|---|
| 0° | 519 | 377 | 378 | 327 | 128 | 28 | 7,7 |
| 10° | 501 | 435 | 249 | 69 | 26 | 15 | 6 |
| 20° | 454 | 408 | 255 | 34 | 16 | 12 | 4,9 |
| 30° | 275 | 275 | 132 | 47 | 15 | 5,7 | 3,1 |
| 40° | 42 | 50 | 29 | 16 | 61 | 2,4 | 1,4 |
| 50° | 9,2 | 6,9 | 3,2 | 2,4 | 2,3 | 0,78 | 0,62 |
| 60° | 1,9 | 1,8 | 1,4 | 2,7 | 1 | 0,79 | 0,67 |

Rotation= 10°

| β2＼β1 | 0° | 10° | 20° | 30° | 40° | 50° | 60° |
|---|---|---|---|---|---|---|---|
| 0° | 539 | 408 | 453 | 441 | 342 | 170 | 26 |
| 10° | 509 | 414 | 324 | 242 | 52 | 22 | 7,2 |
| 20° | 442 | 381 | 154 | 34 | 20 | 13 | 5 |
| 30° | 288 | 237 | 89 | 19 | 13 | 7,5 | 3,8 |
| 40° | 58 | 59 | 32 | 15 | 9,2 | 3,8 | 2,2 |
| 50° | 8,3 | 4,8 | 3,6 | 27 | 1,8 | 1,4 | 0,98 |
| 60° | 3,2 | 8,5 | 6,7 | 0,67 | 0,59 | 0,57 | 0,54 |

Rotation= 0°

| β2＼β1 | 0° | 10° | 20° | 30° | 40° | 50° | 60° |
|---|---|---|---|---|---|---|---|
| 0° | 553 | 420 | 479 | 474 | 362 | 179 | 56 |
| 10° | 516 | 399 | 420 | 404 | 301 | 89 | 16 |
| 20° | 439 | 379 | 230 | 57 | 31 | 15 | 6,4 |
| 30° | 279 | 165 | 37 | 20 | 14 | 9,1 | 3,7 |
| 40° | 69 | 45 | 22 | 12 | 7,8 | 5 | 2,6 |
| 50° | 5,7 | 6,9 | 70 | 4,9 | 3,1 | 2,3 | 1,5 |
| 60° | 2,1 | 2,7 | 1,1 | 1,1 | 1 | 0,88 | 0,7 |

## Table 2

Rotation= 90°

| β2 \ β1 | 0° | 10° | 20° | 30° | 40° | 50° | 60° |
|---|---|---|---|---|---|---|---|
| 0° | 504 | 515 | 523 | 473 | 311 | 124 | 17 |
| 10° | 526 | 530 | 520 | 446 | 285 | 110 | 14 |
| 20° | 503 | 489 | 440 | 343 | 205 | 73 | 8,8 |
| 30° | 348 | 331 | 282 | 205 | 113 | 34 | 4,1 |
| 40° | 175 | 164 | 134 | 90 | 42 | 10 | 1,7 |
| 50° | 60 | 54 | 41 | 24 | 9,4 | 2,7 | 0,83 |
| 60° | 10 | 8,8 | 6,2 | 3,5 | 1,7 | 0,84 | 0,61 |

Rotation= 0°

| β2 \ β1 | 0° | 10° | 20° | 30° | 40° | 50° | 60° |
|---|---|---|---|---|---|---|---|
| 0° | 516 | 526 | 495 | 344 | 170 | 53 | 7,6 |
| 10° | 523 | 528 | 483 | 329 | 165 | 49 | 7 |
| 20° | 528 | 516 | 438 | 286 | 137 | 39 | 5,3 |
| 30° | 476 | 440 | 344 | 214 | 96 | 24 | 3,2 |
| 40° | 309 | 277 | 206 | 120 | 46 | 9,6 | 1,6 |
| 50° | 126 | 110 | 76 | 37 | 12 | 2,8 | 0,82 |
| 60° | 20 | 16 | 10 | 4,9 | 2 | 0,88 | 0,6 |

Table 3

| Viewing angle | CIL values [mcd/m$^2$] | | |
|---|---|---|---|
| | Comparative Example 1 | Comparative Example 2 | Comparative Example 3 |
| 0°/360° | 26,745 | 44,143 | 9,604 |
| 30° | 15,092 | 36,274 | 6,035 |
| 60° | 9,172 | 18,614 | 1,541 |
| 90° | 7,948 | 11,957 | 0 |
| 120° | 10,921 | 18,052 | 265 |
| 150° | 20,563 | 35,175 | 1,037 |
| 180° | 23,160 | 39,447 | 1,069 |
| 210° | 17,091 | 34,251 | 552 |
| 240° | 10,821 | 20,685 | 0 |
| 270° | 7,049 | 12,644 | 425 |
| 300° | 6,175 | 15,929 | 4,324 |
| 330° | 14,443 | 33,627 | 7,808 |

**Claims**

1. Method for estimating the retroreflective performance of a garment having attached thereto retroreflective emblems, said method comprising the steps of:

    (a) subdividing each retroreflective emblem of said garment into discrete subelements;
    (b) providing measured retroreflectivity data allowing calculation of the retroreflectivity of said subelement on the basis of the orientation of said subelement;
    (c) providing a model of the garment;
    (d) determining the retroreflectivity of the subelements that are visible in a desired view from the retroreflectivity data associated with said subelements and the 3-dimensional orientation of each of said subelements on said garment in said model;
    (e) calculating the retroreflective performance of the garment in said desired view from the contribution of said subelements.

2. Method according to claim 1, wherein the model of the garment is a computer generated 3D model of the garment when worn by a user.

3. Method according to claim 1 or 2, wherein the model of the garment comprises a dress pattern of the garment.

4. Method according to any of claims 1 to 3, wherein said retroreflectivity data comprises measured retroreflectivity values at a number of different angles $\beta_1$ and $\beta_2$ around two orthogonal axes X and Y that are each perpendicular to the direction of incident light in said desired view, and wherein step (d) involves for each subelement:

    A. obtaining orientation angles $\beta'_1$ and $\beta'_2$ representing the orientation of said subelement in said model relative to said two orthogonal axes X and Y in said desired view;
    B. retrieving the retroreflectivity value for the angles $\beta_1$ and $\beta_2$ that define an orientation that most closely corresponds to the orientation of said subelement;
    C. calculating the retroreflective performance of said subelement from said retrieved retroreflectivity value.

5. Method according to any of claims 1 to 4, wherein in step C the retroreflective performance is calculated by interpolation.

6. Method according to any of the previous claims, wherein step (e) involves calculating the total retroreflective performance of the garment in the desired view by summing up the retroreflective performance of the subelements visible in said desired view.

7. Method according to any of the previous claims, wherein steps (d) and (e) are repeated at a plurality of discrete views around said garment so as to obtain the retroreflective performance of the garment from different directions of said desired view around said garment.

8. Method according to any of the previous claims comprising the steps of: storing part or all of said retroreflectivity data into a memory of a computer, having a computer generate said model of said garment when worn by a user, having a computer calculate the orientation of said subelement in said model and having a computer calculate the retroreflective performance of said subelement from at least one of said retroreflectivity parameters contained in said retroreflectivity data.

9. Method according to any of claims 1 to 8, wherein the retroreflective performance is presented by the luminance or the coefficient of the luminous intensity.

10. Computer, suitably programmed to carry out the method of any of claims 1 to 9.

11. Computer readable medium comprising a computer program that when loaded in a computer causes said computer to be suitably programmed to carry out the method of any of claims 1 to 9.

**Fig. 1A**

**Fig. 1B**

# Fig. 2

| Angle | CIL [mcd/lx] |
|---|---|
| 0° | 32009 |
| 30° | 23438 |
| 60° | 12197 |
| 90° | 8204 |
| 120° | 9118 |
| 150° | 22777 |
| 180° | 38909 |
| 210° | 22014 |
| 240° | 7903 |
| 270° | 7304 |
| 300° | 11322 |
| 330° | 23218 |

**Fig. 3**

## Fig. 4

| Angle | C IL [mcd/lx] |
|-------|---------------|
| 0° | 33851 |
| 30° | 26148 |
| 60° | 16943 |
| 90° | 8957 |
| 120° | 11293 |
| 150° | 29526 |
| 180° | 40296 |
| 210° | 29238 |
| 240° | 11247 |
| 270° | 8523 |
| 300° | 16383 |
| 330° | 25927 |

**Fig. 5**

**Fig. 6A**

**Fig. 6B**

## Fig. 7

| Angle | C IL [mcd/lx] |
|-------|---------------|
| 0° | 677↓ |
| 30° | 543↓ |
| 60° | 2761 |
| 90° | 479 |
| 120° | 52 |
| 150° | 986 |
| 180° | 129↓ |
| 210° | 763 |
| 240° | 17 |
| 270° | 399 |
| 300° | 2645 |
| 330° | 531↓ |

# Fig. 8

**European Patent Office**

## EUROPEAN SEARCH REPORT

Application Number

EP 03 02 9767

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | DE 197 08 679 A (GMD GMBH) 27 August 1998 (1998-08-27) | 1-3,10, 11 | A41H3/00 |
| A | * abstract * | 2-9 | |
| | --- | | |
| Y | US 2003/150043 A1 (KOPPES ROBERT D) 14 August 2003 (2003-08-14) | 1-3,10, 11 | |
| A | * paragraph [0003] * | 2-9 | |
| | --- | | |
| A | US 2002/186865 A1 (LAUMEYER ROBERT A ET AL) 12 December 2002 (2002-12-12) * paragraphs [0017],[0018],[0091]; claims 8-10,39,40; figures 3,4,12-16 * | 1-11 | |
| | ----- | | |

| | TECHNICAL FIELDS SEARCHED (Int.Cl.7) |
|---|---|
| | A41H G06T G01N G06F |

The present search report has been drawn up for all claims

| Place of search | Date of completion of the search | Examiner |
|---|---|---|
| MUNICH | 18 May 2004 | Uhlig, R |

EPO FORM 1503 03.82 (P04C01)

EP 1 550 381 A1

**ANNEX TO THE EUROPEAN SEARCH REPORT
ON EUROPEAN PATENT APPLICATION NO.**                    EP 03 02 9767

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2004

| Patent document cited in search report | Publication date | Patent family member(s) | Publication date |
|---|---|---|---|
| DE 19708679 A | 27-08-1998 | DE 19708679 A1<br>EP 0862141 A2<br>US 6078333 A | 27-08-1998<br>02-09-1998<br>20-06-2000 |
| US 2003150043 A1 | 14-08-2003 | NONE | |
| US 2002186865 A1 | 12-12-2002 | AU 8643801 A<br>WO 0215144 A2<br>WO 02101340 A2<br>US 2002106109 A1 | 25-02-2002<br>21-02-2002<br>19-12-2002<br>08-08-2002 |